(19) **Europäisches Patentamt**
**European Patent Office**
**Office européen des brevets**

(11) **EP 4 741 654 A1**

(12) **EUROPEAN PATENT APPLICATION**

(43) Date of publication:
**13.05.2026  Bulletin 2026/20**

(21) Application number: **25214647.7**

(22) Date of filing: **10.11.2025**

(51) International Patent Classification (IPC):
**F03G 6/06** *(2006.01)*    **F03G 6/00** *(2006.01)*

(52) Cooperative Patent Classification (CPC):
**F03G 6/089; F03G 6/065; F03G 6/068; F03G 6/071**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.11.2024  US 202418944211**
**18.11.2024  US 202418950474**

(71) Applicant: **Salas Peral, Américo**
**Cuzco (PE)**

(72) Inventor: **Salas Peral, Américo**
**Cuzco (PE)**

(74) Representative: **Torras Toll, Jorge et al**
**Marqués de Campo Sagrado 8 Ático 2**
**08015 Barcelona (ES)**

(54) **SYSTEM FOR CONVERTING SOLAR ENERGY INTO MECHANICAL ENERGY**

(57)    A solar system for the generation of electricity, heating, or other purposes. The solar system comprises a Fresnel lens (1.1) to concentrate sunlight onto a metallic spherical chamber (1.2) to convert a mass of water inside it into superheated steam. This steam is used to generate electricity if expelled through an ejector nozzle (1.3) towards a turbine (1.4), once the system's electronic controller (1.8) determines the opening of an electromagnetic output valve. The turbine is connected to an electricity generator (1.5), and the kinetic energy of the steam can be used for other purposes, for example for driving a water pump or an air compressor.

FIG.1

EP 4 741 654 A1

**Description**

TECHNICAL FIELD

The field of this invention is renewable energy, specifically concerning the utilization of solar energy for the generation of electricity, heating, or other purposes.

BACKGROUND OF THE INVENTION

Currently, the most commonly used systems involve the use of panels with photovoltaic solar cells or reflective parabolic mirrors to heat a working substance, leading to water evaporation. The produced steam is generally used to drive a turbine, which in turn powers an electricity generator.

DETAILED DESCRIPTION OF THE INVENTION

The System for Converting Solar Energy into Mechanical Energy (SCSEME) is an invention whose versatility allows it to be used in any application requiring mechanical energy. It is a system that employs a Fresnel lens to concentrate sunlight onto a relatively small metallic spherical chamber to convert a mass of water inside it into superheated steam. This steam can, for example, be used to generate electricity if expelled through an ejector nozzle towards a turbine, once the system's electronic brain determines the opening of an electromagnetic output valve. The turbine will be connected to an electricity generator via its axis, and the kinetic energy of the steam can be used for other purposes, such as driving a water pump or an air compressor. The advantage of SCSEME is that it takes advantage of the potential temperature achievable directly with a Fresnel lens, exceeding 1600 °C. Furthermore, SCSEME is an easy-to-build and thus economical system, as it does not require any reflective surfaces or intermediate fluids for energy transport.

BRIEF DESCRIPTION OF THE DRAWINGS

To illustrate everything described so far, this specification is accompanied by a sheet of drawings depicting an exemplary embodiment of the invention.

In these drawings:

- Figure 1 shows an overall diagram of the SCESEM for electricity generation according to the present invention;

- Figure 2 shows a diagram of the water doser 2.1;

- Figure 2A shows an electrical connection diagram;

- Figure 3 shows a diagram of the adjustable doser full and the adjustable doser empty;

- Figure 4 shows a diagram of the SCESEM installed in parallel;

- Figure 5 shows a diagram of the SCESEM for air compression;

- Figure 6 shows a diagram of the SCSEME for water pumping;

- Figure 7 shows a diagram of the SCSEME for heating; and

- Figure 8 shows a diagram of the stop device in which:

REFERENCE LIST

1.1 represents a Fresnel lens
1.2 - represents an evaporation chamber
1.3 - represents a nozzle
1.4 - represents a turbine
1.5 - represents an electricity generator

1.6 - represents a flywheel

1.7 - represents a battery

1.8 - represents a control center

1.9 - represents a frame of the Fresnel lens

1.10 - represents a solar tracker

1.11 - represents a rigid quadrangular structure

2.1 - represents a water dosing system

2.2 - represents a main body

2.3 - represents a chamber 1

2.4 - represents a chamber 2

2.5 - represents a first sliding piston

2.6 - represents a compression spring

2.7 - represents a fixed wall

2.8 - represents a chamber 3

2.9 - represents an electromagnetic purge valve

2.10 - represents a second sliding piston

2.11 - represents a connecting rod

2.12 - represents a seal

2.13 - represents a fixed rod

2.14 - represents a handle

2.15 - represents a manual passage valve

2.16 - represents an inlet check valve

2.18 - represents an electromagnetic inlet valve

2.19 - represents a return line

2.20 - represents an electromagnetic return valve

2.21 - represents a steam outlet line

2.22 - represents an electromagnetic outlet valve

2.23 - represents a pressure switch

2.24 - represents a pyrometer

2.25 - represents a safety valve

1.2 - represents an evaporation chamber

1.3 - represents a nozzle

3.10 - represents a flexible section of the inlet line

3.11 - represents a flexible section of the supply line

3.12 - represents a flexible section of the return line

3.13 - represents a quick coupling

1.8 - represents a control center

2.9 - represents an electromagnetic purge valve

2.18 - represents an electromagnetic inlet valve

2.20 - represents an electromagnetic return valve

2.22 - represents an electromagnetic outlet valve

2.23 - represents a pressure switch

2.24 - represents a pyrometer

8.1 - represents a servomotor

3.1 - represents an adjustable water doser

3.2 - represents a main body

3.3 - represents a threaded piece

3.4 - represents a perforated disc

3.5 - represents a rods

3.6 - represents a rotating movable lid

3.7 - represents a O-ring

3.8 - represents a water inlet line

3.9 - represents an inlet line to evaporation chamber

2.3 - represents a chamber 1

2.8 - represents a chamber 3

2.10 - represents a second sliding piston

3.13 - represents a quick coupling

4.1- represents a first SCSEME unit

4.2 - represents a second SCSEME unit

4.3 - represents a third SCSEME unit

4.4 - represents a larger capacity battery

5.1 - represents a drive cylinder

5.2 - represents an electromagnetic purge valve

5.3 - represents a first piston

5.4 - represents a central rod

5.5 - represents a second piston

5.6 - represents a compression cylinder

5.7 - represents an air intake line

5.8 - represents an inlet check valve

5.9 - represents an air output line

5.10 - represents an output check valve

5.11 - represents a storage tank

5.12 - represents a manometer

5.13 - represents a safety valve

5.14 - represents an air purge valve

5.15 - represents an air discharge line

5.16 - represents a manual air outlet valve

1.2 - represents an evaporation chamber

2.21 - represents a steam outlet line

2.22 - represents an electromagnetic outlet valve

6.1 - represents a drive cylinder

6.2 - represents an electromagnetic purge valve

6.3 - represents a first piston

6.4 - represents a central rod

6.5 - represents a second piston

6.6 - represents an impeller cylinder

6.7 - represents a water suction line

6.8 - represents an inlet check valve

6.9 - represents a water discharge line

6.10 - represents an outlet discharge check valve

6.11 - represents a tension spring

6.12 - represents a damping ring

6.13 - represents a O-ring

6.14 - represents a stop

1.2 - represents an evaporation chamber

2.21 - represents a steam outlet line

2.22 - represents an electromagnetic outlet valve

7.1 - represents a thermal storage tank

7.2 - represents a heat absorbing material

7.3 - represents a coil

7.4 - represents an electromagnetic outlet valve

8.1 - represents a servomotor

8.2 - represents a vertical support

8.3 - represents an arm

8.4 - represents an opaque circle

1.1 represents a Fresnel lens

1.2 represents an evaporation chamber

DETAILED DESCRIPTION OF THE INVENTION

The operating principle of SCSEME is novel compared to existing systems, as it directly utilizes the solar ray concentration effect produced by a Fresnel lens without needing reflective elements or fluids for energy transport. It is based on what happens inside a closed spherical metallic container called the evaporation chamber, which initially contains water and air and is located at the focal point of the Fresnel lens. In such a container, the contents will experience a constant increase in temperature and pressure.

This process will involve evaporation initially, without boiling within the liquid phase of the working substance, namely, water. This condition will persist until the temperature increase eventually transforms the entire mass of water into steam. When the output valve of the evaporation chamber is opened, the pressurized air and superheated steam will be violently ejected through the output nozzle; this outflow will have very high kinetic energy due to the temperature provided by a Fresnel lens typically reaching between 1200 °C and 1600 °C. Therefore, the obtainable energy potential is considerable. The water and air content in the evaporation chamber may vary according to the requirements of each installation, meaning that the ratio of water and air can be predetermined according to each application, covering the entire range of proportions from a minimum water content to 100% of it.

An approximation of the heat and pressure values that can be obtained is found in Annex A. This annex clearly shows the pressure and energy conversion potential that SCSEME offers for a 30% water content, a percentage chosen arbitrarily for illustrative calculation purposes, along with a similarly referential final temperature of 1000 °C, knowing that 1600 °C can currently be achieved with a Fresnel lens. Variations according to the mass ratio of water used are also shown in a table. As is evident, the thickness of the material selected for the evaporation chamber must be expressly calculated to withstand both the operating temperature and the pressure inside.

An alternative to achieve different ranges of converted energy is to vary the dimensions of both the evaporation chamber and the other components, as mentioned previously.

As SCSEME can be used for various purposes, its components will be selected or sized according to the application for which the equipment is intended, as well as based on the different regimes that may be adopted for the same application. For explanatory purposes, an initial exposition will be made of the configuration aimed at obtaining electrical energy with the present invention.

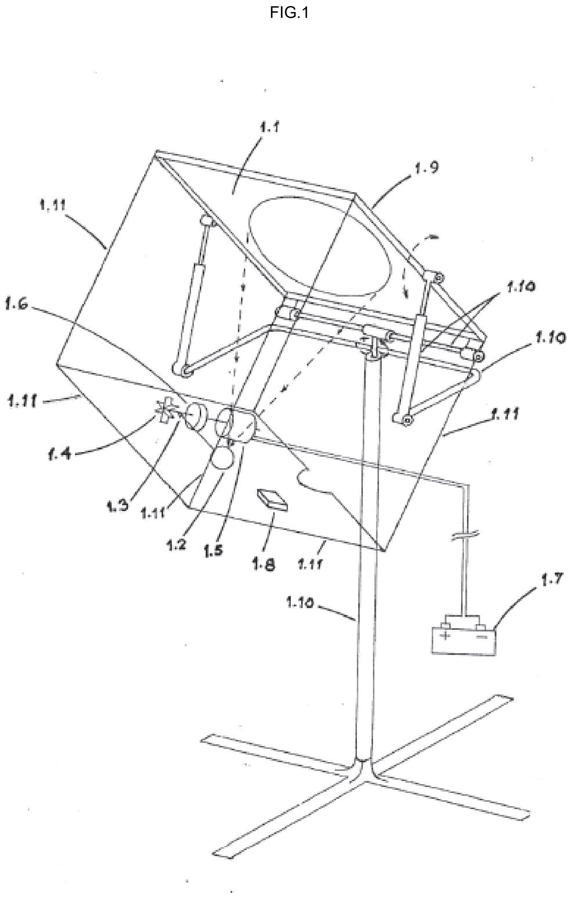

The System for Converting Solar Energy into Mechanical Energy (SCSEME) is designed to harness solar energy using a relatively small mass of water as the working substance, with the main components being a Fresnel lens (1.1), a spherical metallic evaporation chamber (1.2), an ejector nozzle (1.3), a turbine (1.4) connected to an electricity generator (1.5) on its axis, a flywheel (1.6) between the turbine (1.4) and the generator (1.5), a battery (1.7) for storing the obtained electrical energy, and also an electronic control center (1.8) to program the operating parameters of the system and control the process. The arrangement of the aforementioned elements and others is shown in FIG. 1.

In SCSEME, energy conversion is achieved using a suitably selected Fresnel lens in terms of both its temperature-generating capacity and its geometry, which serves to concentrate sunlight at its focus, where the evaporation chamber is located, within which a specific mass of water is heated. This chamber, as mentioned, is of appropriate dimensions for each case, following the concept of heating a relatively small mass of water in each cycle. The evaporation chamber (1.2) has a water inlet line (2.17), with an electromagnetic inlet valve (2.18) mounted on it; additionally, there is a bypass or return line (2.19) between the inlet valve (2.18) and the evaporation chamber (1.2), also mounted with an electromagnetic valve called the return valve (2.20), which connects to a water doser (2.1). The evaporation chamber (1.2) also has an outlet line (2.21), similarly equipped with an electromagnetic valve named the outlet valve (2.22) and subsequently an ejector nozzle (1.3). The evaporation chamber (1.2) has a pressure switch (2.23) incorporated, along with peripheral elements including a pyrometer (2.24) and a safety valve (2.25).

The Fresnel lens must follow the sun's height and azimuth path; for this, it is installed in a frame (1.9) mounted on a solar tracker (1.10) with two degrees of freedom, meaning it is designed to follow the solar movement both in its daily and annual displacement. This solar tracker should be selected according to the dimensions and weight of the installation it will support in each case.

Considering that the evaporation chamber must always remain in a fixed position relative to the lens to stay continuously at its focus, there is a rigid quadrangular structure (1.11) that is solidly attached to the Fresnel lens frame, so that this structure and whatever it contains move together, maintaining the initial relative positions.

The SCSEME has an Arduino electronic board incorporated into its control center (1.8), which serves as the brain of the installation, through which the system's work process is programmed and controlled, adhering to the prescribed pressure, temperature, or time parameters.

When the pressure switch (2.23) registers the preset working pressure value loaded in the programming, it will send a signal to the system's brain, which will order the opening of the outlet valve (2.22), thus releasing the contents of the heating chamber (1.2) directed to the turbine (1.4) through the nozzle (1.6), causing it to rotate along with the electricity generator (1.5) installed on its axis. The obtained electrical energy will be transported to a battery (1.7).

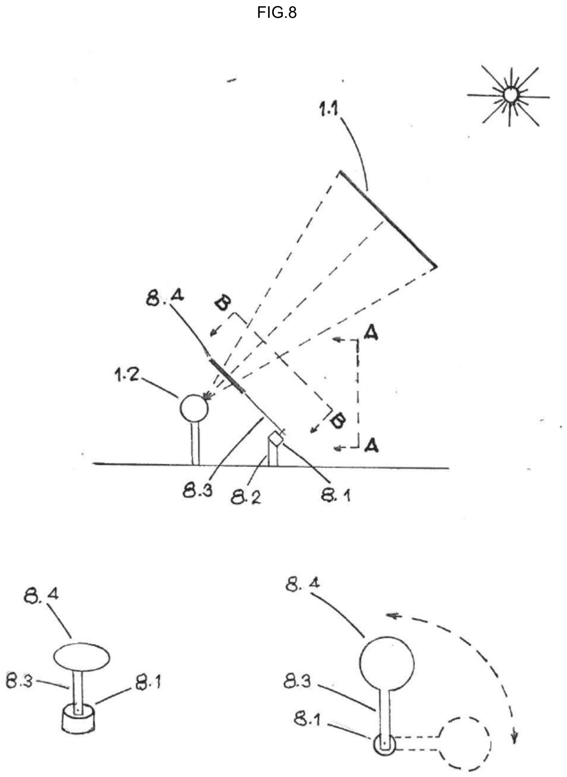

The SCSEME also includes a pyrometer (2.24), a thermometer designed for high temperatures, which serves to stop the operation of SCSEME in case of overheating by activating the shutdown device. For example, if the working temperature is set to 1000 °C and it is desired that the system stops at 1100 °C, this value of 1100 °C can be programmed so that the control center stops the system by sending a command to a servomotor (8.1), installed on a vertical support of adequate height (8.2). This servomotor has an arm (8.3) that holds a rigid circle (8.4) made of a lightweight but opaque material, which will block sunlight from reaching the evaporation chamber by positioning itself above the focal point of the Fresnel lens, preventing heat damage. In this way, the pyrometer acts as a redundant safety element to protect the system (FIG. 8). The shutdown device can also be programmed to determine the start and end of the SCSEME working process. Considering that the SCSEME can operate under high-pressure values, a safety valve (2.25) will be incorporated.

Taking into account that the SCSEME is a system that operates depending on the incidence of sunlight, which is not constant, the installation includes a flywheel (1.6) on the axis between the turbine (1.4) and the electricity generator (1.5) to provide the greatest possible stability to the process of obtaining electrical energy in the generator (1.5). Eventually, a load dump or dissipator may be incorporated, depending on the operating conditions.

Once the evaporation chamber (1.2) has been discharged, the system will follow a sequence aimed at recharging the system to initiate a new cycle.

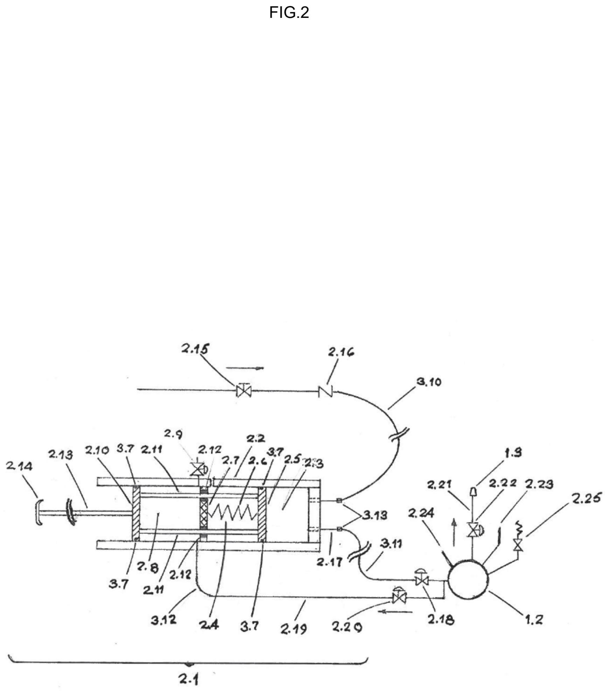

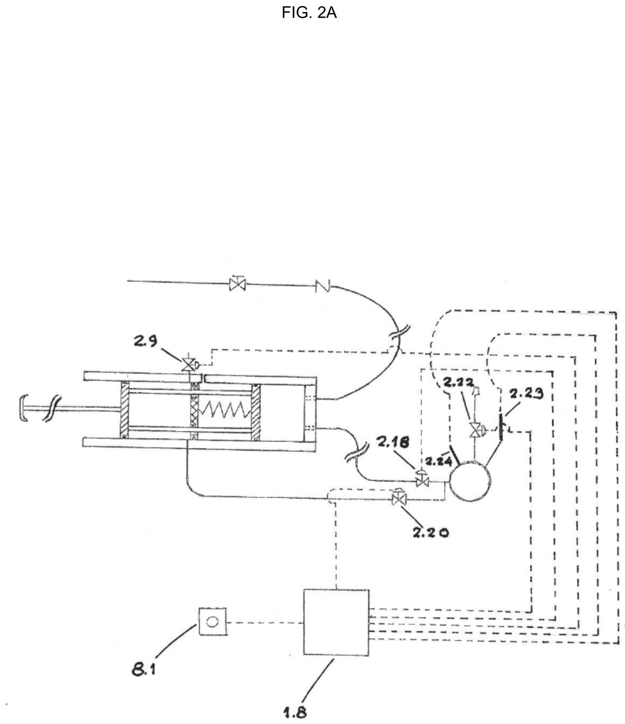

Considering that after the first process the evaporation chamber (1.2) will be at high temperature, a tubular water doser (2.1) with three chambers has been included to ensure a rapid and measured water refill, the operation of which is described as follows: The doser has a main body (2.2) and three chambers; in chamber 1 (2.3) the predetermined amount of water is received, which will feed the evaporation chamber (1.2). Chamber 1 (2.3) is separated from chamber 2 (2.4) by a sliding piston (2.5). In chamber 2 (2.4), which is open to the environment, a compression spring (2.6) is installed, anchored to the fixed wall (2.7) that separates chambers 2 (2.4) and chamber 3 (2.8), and is connected to the aforementioned piston (2.5). Chamber 3 (2.8), open or closed to the environment by a purge electromagnetic valve (2.9), has a second sliding piston (2.10), which is connected by two rods (2.11) to the piston (2.5) of chamber 1; these rods pass through the fixed wall (2.7) between chambers 2 (2.4) and 3 (2.8) and have seals (2.12) in that wall (2.7) to prevent fluid passage between them; the rods (2.11) will cause the pistons of chambers 1 (2.3) and 3 (2.8) to move together. The piston of chamber 3 (2.10) has a fixed rod (2.13) extending to the outside of the doser and ending in a handle (2.14) for manual manipulation of the doser. The pistons of chambers 1 (2.3) and 3 (2.8) have seals or O-rings (3.7) on their circumferences to ensure the necessary airtightness. Chamber 3 (2.8) is connected to the return line (2.19), which, as previously mentioned, also has an electromagnetic valve called the return valve (2.20). The inlet line has a manual passage valve (2.15) connected to the local drinking water network and a check valve (2.16) to prevent water from returning from chamber 1 of the doser. The doser is shown in FIG. 2. FIG. 2A shows the electrical connection via electrical cables between the electromagnetic valves the pressure switch, the pyrometer and the electronic control center.

During the temperature increase process in the evaporation chamber, the electromagnetic return valve (2.20) must be opened when the pressure switch (2.23) detects a minimum but sufficient pressure to overcome the force of the spring (2.6), so that, with the electromagnetic inlet valve (2.18) closed, a fraction of the existing pressurized fluid in the evaporation chamber (1.2) goes to chamber 3 (2.8) of the doser. With the electromagnetic purge valve (2.9) closed, this will cause chamber 3 (2.8) to expand, compressing the spring (2.6) in chamber 2 (2.4), which drags the piston of chamber 1 (2.5) and allows a new load of water to enter chamber 1 (2.3) to feed the system; having fulfilled this function, the return valve (2.20) will be immediately closed, and the electromagnetic purge valve (2.9) will be opened. In this way, the water in chamber 1 (2.3) of the doser will be pressurized by the spring (2.6) until it is released by opening the inlet valve (2.18) so that it can rapidly enter the evaporation chamber (1.2), with the return valve (2.20) closed and maintaining the inlet valve (2.18) and the electromagnetic outlet valve (2.22) open. Once the evaporation chamber (1.2) is filled, the electromagnetic inlet valve (2.18) and the outlet valve (2.22) will be closed. With this, a new cycle can be initiated.

To access the SCSEME programming, a mobile application is used that establishes a connection with the electronic control circuit via Bluetooth. The sequence of operation of the components, as well as the description of the use of the application, is detailed in Annex B.

Considering that the system can operate under different regimes, i.e., with different proportions of water and air in the evaporation chamber, the SCSEME incorporates an adjustable doser (3.1), which has a threaded section at the right end, made in the outer surface of the main body (3.2) of the adjustable doser (3.1). In this section, a piece (3.3) with an inner thread is screwed from the outside; this piece has a disc (3.4) with a circular hole in its center, to the edge of which two rods (3.5) are welded in diametrically opposite positions. These rods (3.5) are also welded to a second disc, which is the rotating movable lid (3.6) of chamber 1 (2.3). With this arrangement, the movable lid (3.6) will rotate along with the piece (3.3) when it is turned clockwise or counterclockwise, thus decreasing or increasing the volume of chamber 1 (2.3), respectively. The rotating movable lid (3.6) has a channel on its circumference, in which an O-ring (3.7) is housed to prevent the liquid from chamber 1 (2.3) from leaking outside. Additionally, the rotating movable lid (3.6) has two channels in its center that traverse it, each connected to a rigid tubular line ending in a connector; one of the lines (3.8) is connected to the water inlet line and the other (3.9) to the inlet line to the evaporation chamber (1.2). The connections will be made with quick couplings or connections (3.13).

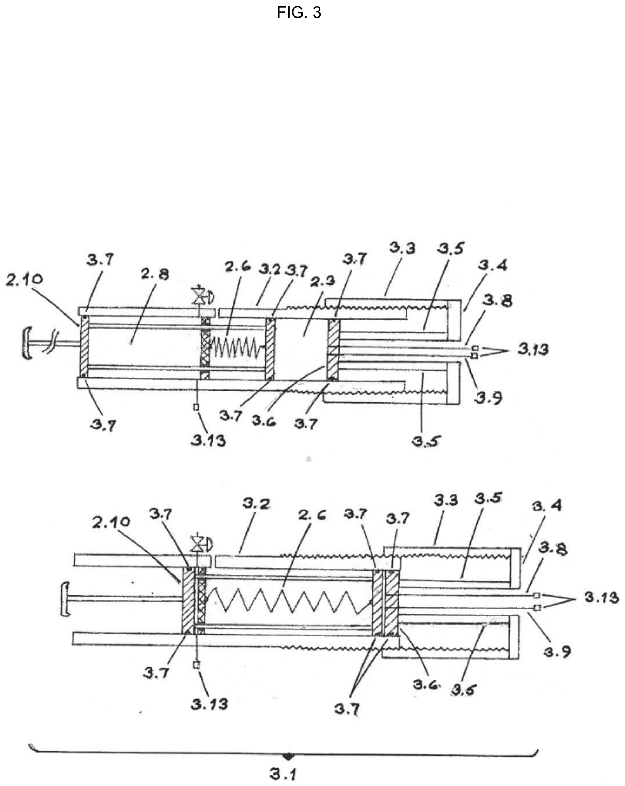

The dimensions of each part of the adjustable doser will be calculated not only to ensure that the volume of water supplied is adequate but also to guarantee the optimal functioning of the compression spring (2.6). The adjustable doser is shown in FIG. 3 when full in the upper image and being empty in the lower image.

Since the components of the SCSEME located in its square structure move following the sun's trajectory, and the doser is fixed, outside this structure, three sections of flexible line are incorporated: one in the inlet line to the doser (3.10), one in the inlet line to the evaporation chamber (3.11), and another in the return line (3.12).

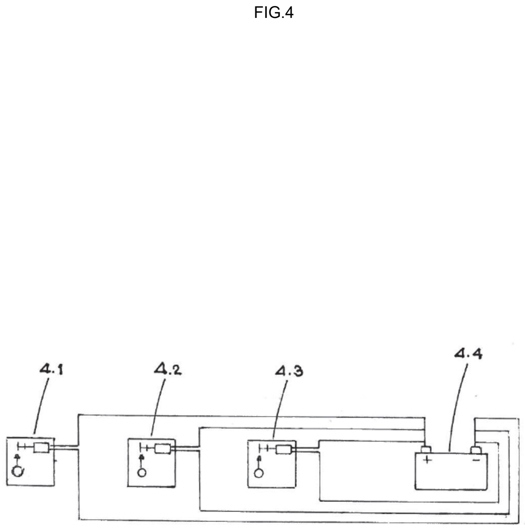

The versatility of the SCSEME offers the possibility of installing two or more units in parallel, supplying a larger capacity battery (4.4) as shown in FIG. 4, where schemes 4.1, 4.2, and 4.3 represent SCSEME units. The number of installed units will depend on the capacity of the battery or set of batteries required.

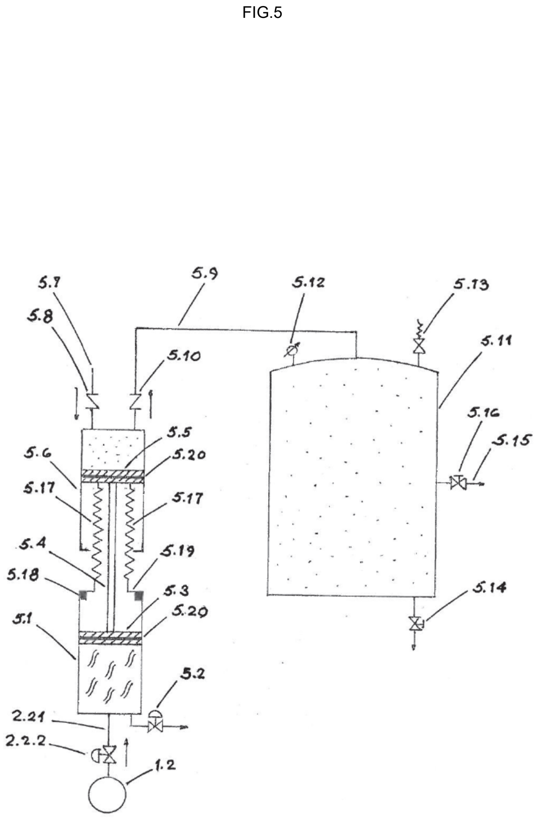

If the SCSEME is applied to obtain compressed air, this can be done, as shown in FIG. 5, by connecting the outlet line (2.21) of the evaporation chamber (1.2) to a cylinder, called the drive cylinder (5.1), which has a electromagnetic purge valve (5.2) in its lid and a first piston (5.3), connected via a central rod (5.4) to a second piston (5.5), installed in a cylinder called the compression cylinder (5.6), which has two air lines installed in its lid, one for intake (5.7) with an inlet check valve (5.8) and another for output (5.9), with its corresponding output check valve (5.10). When the piston of the compression cylinder (5.5) moves towards its lid, the contained air will be forced out through the outlet line (5.9) to the storage tank (5.11), which will be equipped with a pressure gauge (5.12), a safety valve (5.13), a purge valve (5.14), and an outlet line (5.15) with a manual valve (5.16).

The process sequence will always be managed by the control center (1.8) as it is programmed.

When the outlet valve (2.22) of the evaporation chamber (1.2) is opened, the purge electromagnetic valve (5.2) of the drive cylinder (5.1) will be closed; consequently, the piston of this cylinder (5.3) will be displaced by the received steam, along with the piston of the compression cylinder (5.5).

Once the work is done, the purge valve (5.2) will be opened, allowing the pistons (5.3) and (5.5) to return to their initial positions, thanks to the installed tension springs (5.17) for this purpose, leaving the assembly ready to start a new cycle. The drive cylinder has a damping ring (5.18) at the piston stop (5.19). The pistons of the actuation and compression cylinders both have rings (5.20) as seals that provide airtightness.

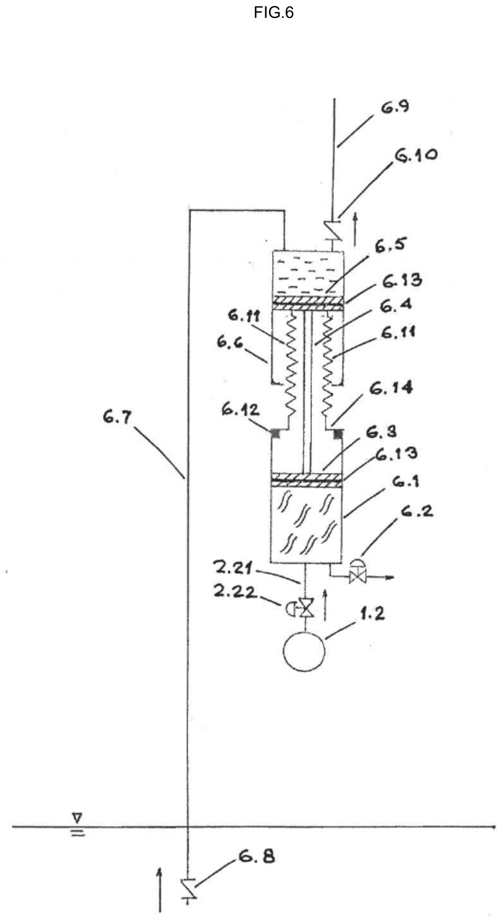

If it is desired to operate a water pump with the SCSEME, this can be achieved using the arrangement shown in FIG. 6, which illustrates a vertical arrangement of elements similar to that applied for compressing air. In this case, the output line (2.21) of the evaporation chamber (1.2) is also connected to a cylinder, referred to as the drive cylinder (6.1), which has a electromagnetic purge valve (6.2) on its cap and a first piston (6.3), connected by a central rod (6.4) to a second piston (6.5) installed in a cylinder called the impeller cylinder (6.6). The impeller cylinder has two water lines installed on its cap, one for suction (6.7) with an inlet check valve (6.8) and another for discharge (6.9), with its corresponding discharge check valve (6.10). When the piston (6.5) of the impeller cylinder (6.6) moves towards its cap, the contained water will be propelled out through the discharge line (6.9). The operation will also be similar to the previous case, meaning that when the outlet valve (2.22) of the evaporation chamber (1.2) is opened, the electromagnetic purge valve (6.2) of the drive cylinder (6.1) will be closed. Consequently, the piston (6.3) of this cylinder will be displaced by the received steam, along with the piston (6.5) of the impeller cylinder (6.6).

Once the work is completed, the purge valve (6.2) will open, allowing the pistons (5.3), (6.5) to return to their initial position, thanks to the tension springs (6.11) installed for this purpose, leaving the assembly ready to initiate a new cycle. The drive cylinder has a damping ring (6.12) at the stop (6.14) of the piston (6.3). The pistons of the drive (6.1) and impeller cylinders (6.6) both have rings (6.13) as seals that provide tightness. The sequence of the process will always be managed by the control center (1.8) according to how it is programmed.

If the SCSEME is to be used as a heat source for heating purposes, the steam generated in the evaporation chamber (1.2) can be directed to a thermal mass storage tank (7.1), where heat from steam at 1000°C or more will be transferred to a material or combination of materials (7.2) with good heat absorption.

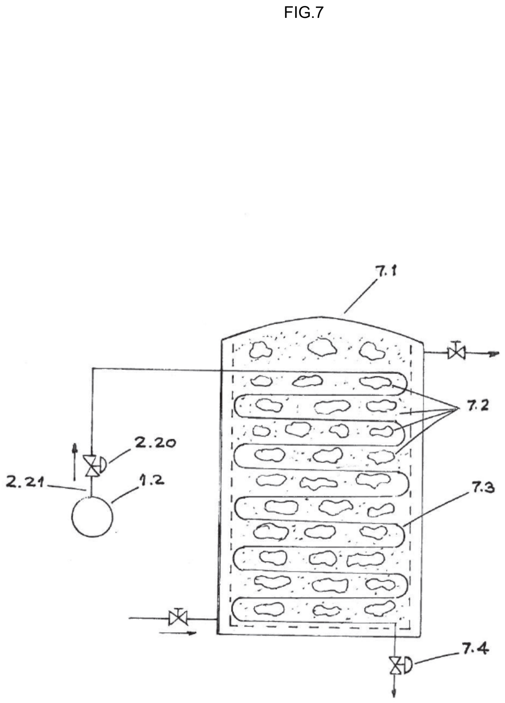

This can be accomplished using, for example, a coil (7.3) for heat exchange from the steam to the mass. The heat stored in the tank can later be used when necessary to heat livable spaces at night, using air that absorbs heat from the storage tank (7.1) to warm air that releases heat to the environment to be climatized through a radiator, for instance. After the heat transfer from the steam to the storage tank (7.1), the remaining or condensed steam can be discharged to the environment through the outlet valve (7.4). FIG. 7.

Any of the applications of the SCSEME is based on the described configuration, composed of the same principle and the same programming, control, and sequencing concepts previously noted. The sequence of the process will always be managed by the control center (1.8) according to how it is programmed.

ANNEX A

To demonstrate the pressure and energy potential achievable with SCSEME, this reference example will work with an evaporation chamber 10 cm in diameter (0.01 m), containing a mass of water occupying only 30% of its interior volume, and a final temperature of 1000 °C. Considering that the density of water is 1000 $Kg/m^3$, for 30% of the total volume, the water mass will be 0.15708 Kg.

PRESSURE, WATER, AND AIR

Thus, there is a mass of 0.15708 Kg of water in a closed, rigid, spherical container with a total volume (Vt) of 0.0005236 $m^3$. The water occupies 30% of Vt, while the remaining 70% is filled with air. Given the initial conditions: initial temperature (Ti) of 15 °C, initial pressure (Pi) of 101300 Pa (atmospheric pressure), and a final temperature (Tf) of 1000 °C, find the final pressure (Pf).

The air density is 1.225 $Kg/m^3$.

STEP 1: Volume Occupied by Water (V water)
Volume of water (V water): 0.30Vt

$$V\ water = 0.00015708\ m^3$$

STEP 2: Volume Occupied by Air (V air)

$$V\ air = Vt - Vwater$$

$$V\ air = 0.00036652\ m^3$$

STEP 3: Mass of Air (m air)

$$The\ air\ density\ (\rho\ air) = 1.225\ Kg/m^3$$

$$m\ air = \rho\ air\ .\ V\ air$$

$$m\ air = 0.000449\ Kg$$

STEP 4: Calculation of Final Pressure (Pf) Using Boyle's Law

First, convert temperatures to Kelvin (K)
Initial Temperature (Ti)

$$Ti = 15 + 273.15 = 288.15\ K$$

Final Temperature (Tf)

$$Tf = 1000 + 273.15 = 1273.15\ K$$

Since the container's total volume does not change, the total pressure can be calculated using Boyle's Law:

$$Pi/Ti = Pf/Tf$$

$$Pf = Pi\ .\ Tf/Ti$$

$$Pf\ air = 101300 \times 1273.15\ /\ 288.15$$

Pf air = 448802 Pa
Final pressure in the container when the temperature reaches 1000 °C:
Pf air = 4.49 bar
To determine the final pressure of the water, consider that it is in vapor state at 1000 °C.
The properties of water vapor will be used to find this pressure.

STEP 1: Convert Tf to Kelvin

$$Tf = 1000 + 273.15 = 1273.15\ K$$

STEP 2: Determine the Saturation Pressure of Water Vapor at 1000 °C

The saturation pressure of water vapor at 1000 °C can be found in vapor property tables. For 1000 °C, the saturation pressure is approximately 1014.4 KPa, or 1014400 Pa. Since the water occupied 30% of the initial volume and is in vapor state at 1000 °C, the corresponding pressure at this temperature is the saturation pressure. Therefore, the final pressure of the water vapor at this temperature is 1014400 Pa or 10.14 bar.
Pf water = 10.14 bar
The final pressure of the content, the sum of air and water pressures, will be:
Pft = 14.63 bar
As can be seen, the result is significant.

HEAT, WATER

There is a mass of 0.15708 Kg of water in a closed, rigid, spherical container with a total volume (Vt) of 0.0005236 m$^3$. The water occupies 30% of Vt, while the rest is occupied by air.
Given the initial conditions: Initial temperature (Ti) = 15 °C, initial pressure (Pi) = 101300 Pa (Atmospheric Pressure), and final temperature (Tf) = 1000 °C, find the heat (Q) transferred to the water, the heat (Q) transferred to the vapor, and the heat (Q).

The specific heat of water (C water) is: 4.186 KJ/Kg°C

The specific heat of vapor (C vapor) is: 1.996 KJ/Kg°C

The latent heat of water (C L water) is: 2260 KJ/Kg°C

The calculation must be done in stages:

Heat transferred to the water to raise it from 15 °C to 100 °C (sensible heat of water)
Heat required to convert the water to vapor at 100 °C (heat of vaporization)
Heat required to heat the vapor from 100 °C to 1000 °C (sensible heat of vapor)

Development

1.- Heat transferred to the water to heat it from 15 to 100 °C

The water mass is the same as in the previous calculation:
m water = 0.15708 Kg
The heating temperature is:

$$\Delta T \text{ water} = 100\,°C - 15\,°C = 85\,°C$$

The sensible heat needed to heat the water:

$$Q\,S\text{ water} = m\text{ water} \,.\, C\text{ water} \,.\, \Delta T\text{ water}$$

Q S water = 0.15708 Kg . 4.186 KJ/Kg °C . 85 °C
Q S water = 55.890 KJ

2.- Heat required to convert the water to vapor at 100 °C

The heat required for vaporization is:

Q vaporization = m water . C L water
Q vaporization = 0.15708 Kg . 2260 KJ/Kg
Q vaporization = 355.328 KJ

3.- Heat required to heat the vapor from 100 to 1000 °C

The vapor heating temperature is:

$$\Delta T \text{ vapor} = 1000 \text{ }^{\circ}C - 100 \text{ }^{\circ}C$$

$\Delta$T vapor = 900 °C

The sensible heat needed to heat the steam:

Q S vapor = m water . C steam . $\Delta$T steam
Q S vapor = 0.15708 Kg . 1.996 KJ/Kg °C . 900 °C
Q S vapor = 283.071 KJ

Total heat (QT) transferred in each stage:

$$QT = Q \text{ sensible water} + Q \text{ vaporization} + Q \text{ S vapor}$$

$$QT = 55.890 \text{ KJ} + 355.328 \text{ KJ} + 283.071 \text{ KJ}$$

QT = 693.069 KJ

This shows that the amount of energy is very considerable.

HEAT, AIR

If the air density is 1.225 Kg/m$^3$ and the specific heat of air (C air) is 1.012 KJ/Kg °C, what is the heat transferred to the air (Q air)?

To calculate the heat transferred to the air, first find the air mass in the container and then use the sensible heat relationship to determine the heat transferred to the air.

1.- Air mass in the container

The total container volume (Vt) is 0.0005236 m$^3$, with 70% of this volume occupied by air (V air).

$$V \text{ air} = 0.7 \text{ x } 0.0005236 \text{ m}^3$$

V air = 0.00036752 m$^3$

The air density ($\rho$ air) is 1.225 Kg/m$^3$, so: m air = $\rho$ air . V air

$$m \text{ air} = 1.225 \text{ Kg/m}^3 \text{ x } 0.00036752 \text{ m}^3$$

m air = 0.0004504 Kg

2.- Calculation of Heat Transferred to the Air (Q air)

As the air is heated from 15 to 1000 °C, the air heating temperature is:

$$\Delta T \text{ air} = 1000 \text{ }^{\circ}C - 15 \text{ }^{\circ}C$$

$\Delta$T air = 985 °C

The specific heat of air (C air) is 1.012 KJ/Kg °C

Thus, the sensible heat transferred to the air (Q air) is: Q air = 0.0004504 Kg . 1.012 KJ/Kg °C . 985 °C Q air = 0.441 KJ

Therefore, it can be concluded that the heat transferred to the air is negligible compared to the heat transferred to the water.

Below is a table showing the different heat values obtainable with the SCSEME for the previous example, with different water mass percentages: m water total = 0.5236 Kg C water = 4.186 KJ/Kg °C C steam = 1.996 KJ/Kg °C L water = 2260 KJ/Kg

| % m water | m water (Kg) | Q1 (KJ) | Q2 (KJ) | Q3 (KJ) | Q total (KJ) |
|---|---|---|---|---|---|
| 0.1 | 0.05236 | 18.6302116 | 118.3336 | 94.059504 | 231.023316 |
| 0.2 | 0.10472 | 37.2604232 | 236.6672 | 188.119008 | 462.046631 |
| 0.3 | 0.15708 | 55.8906348 | 355.0008 | 282.178512 | 693.069947 |
| 0.4 | 0.20944 | 74.5208464 | 473.3344 | 376.238016 | 924.093262 |
| 0.5 | 0.2618 | 93.151058 | 591.668 | 470.29752 | 1155.11658 |
| 0.6 | 0.31416 | 111.78127 | 710.0016 | 564.357024 | 1386.13989 |
| 0.7 | 0.36652 | 130.411481 | 828.3352 | 658.416528 | 1617.16321 |
| 0.8 | 0.41888 | 149.041693 | 946.6688 | 752.476032 | 1848.18652 |
| 0.9 | 0.47124 | 167.671904 | 1065.0024 | 846.535536 | 2079.20984 |
| 1 | 0.5236 | 186.302116 | 1183.336 | 940.59504 | 2310.23316 |

According to this table, for a full evaporation chamber 2310 KJ of thermal energy are obtained.

If this energy were released in 1 second, 2.3 MW would be generated during that time.

It is also worth noting that the diameter of the evaporation chamber can be increased, and with this, its total volume.

ANNEX B

SEQUENCE OF OPERATION FOR SOLENOID VALVES

INITIAL CONDITION: Evaporation chamber (1.2) empty, doser (2.1) empty.

MANUAL PRIMING: With the manual intake valve (2.15) and purge valve (2.9) open, pull the handle (2.14) until the spring (2.6) is fully compressed: Water enters chamber 1 (2.3) of the dispenser (2.1). All other valves remain closed.

AUTOMATIC SEQUENCE

Open intake valve (2.18), purge valve (2.9), and outlet valve (2.22): Water enters the evaporation chamber (1.2).

When the pressure switch (2.24) detects enough pressure to overcome the spring (2.6), the purge valve (2.9) closes first, followed by the opening of the return valve (2.20): Compression of the spring (2.6) and refilling of water content in chamber 1 (2.3) of the doser.

Close return valve (2.20) and open purge valve (2.9): Doser (2.1) is prepared.

When the pressure switch (2.24) detects the prescribed working pressure, open the outlet valve (2.22): High-kinetic energy, high-temperature steam is released.

Open intake valve (2.18) and outlet valve (2.22): Water enters the evaporation chamber (1.2).

Sequence restarts.

To interact with SCSEME, i.e., to set the sequence of opening or closing the solenoid valves, adjust the duration of each condition, set the total operation time, and input the operating parameters of the pressure switch and pyrometer, a mobile phone application is used, communicating via Bluetooth with the system's electronic control circuit. This application, developed in APP Inventor, is named SCSEME.

When the user opens the application on their mobile phone, the program will search for the Bluetooth signal emitted by the electronic circuit. If the signal is not found, for instance, because the electronic circuit is off, the app will close and display an error message. If the connection is successful, the app will display a screen with operational parameters and configuration controls below. Once the desired parameters are set using the configuration controls, the user will press the Save button, thus applying the prescribed parameters for the SCSEME process. Finally, the Start button is pressed to begin the energy conversion process, after manually loading a working mass of water into the dispenser. The process then continues automatically.

**Claims**

1.  A solar energy conversion system for converting solar energy into mechanical energy, **characterized in that** it comprises:

    - a Fresnel lens;
    - an evaporation chamber having a metallic spherical shape;
    - a programmable electronic control center;
    - lines for conducting water and steam, electrical cables, and electromagnetic valves;
    - a frame configured to hold the Fresnel lens;
    - a quadrangular structure connected to said frame and configured to keep the evaporation chamber permanently at the focus of the lens and to support the necessary accessories of the system, the quadrangular structure being mounted on a solar tracker with two degrees of freedom;
    - an ejection nozzle;
    - a turbine;
    - a flywheel;
    - an electric generator;
    - a battery or electricity accumulator; and
    - accessories for an air compression device, a water pumping device, a heating device, or components necessary to drive other equipment requiring mechanical energy;

    wherein the system evaporates a specific mass of water in the evaporation chamber to produce superheated steam due to the Fresnel lens capability of reaching a temperature above 1600 °C, and wherein the superheated steam is used under different operating regimes of the system and provides different energy conversion capacities by adapting the dimensions as required, and the operation of the system is controlled by the programmable electronic control center.

2.  The system according to claim 1, further comprising a three-chamber water doser configured to recharge the working mass in the evaporation chamber for each work cycle.

3.  The system according to claim 2, wherein the three-chamber water doser is adjustable.

4.  The system according to claim 1, wherein the system is installed in parallel, supplying a larger capacity accumulator or battery with two or more generating units.

5.  The system according to claim 1, wherein the system is configured to generate electricity.

6.  The system according to claim 1, wherein the system is configured to compress air, comprising a drive cylinder and a compression cylinder, pistons of the compression cylinder being connected by a rod, and including an air storage tank together with the other elements.

7.  The system according to claim 1, wherein the system is configured to pump water, comprising a drive cylinder and an impeller cylinder, pistons of the impeller cylinder being connected by a rod, and including specified components and accessories.

8.  The system according to claim 1, wherein the system is configured to provide heating and comprises a thermal mass storage tank, a heat exchange coil, and specified components and accessories.

FIG.1

FIG.2

FIG. 2A

FIG. 3

FIG.4

FIG.5

FIG.6

FIG.7

FIG.8

EUROPEAN SEARCH REPORT

**Application Number**

EP 25 21 4647

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/331098 A1 (VON BEHRENS PETER EMERY [US] ET AL) 31 October 2019 (2019-10-31) * paragraph [0104]; claim 1; figure 16A * ----- | 1-8 | INV. F03G6/06 F03G6/00 |
| X | WO 2008/108870 A1 (UNIV CITY [US]; SHINNAR REUEL [US]) 12 September 2008 (2008-09-12) * paragraph [0014]; claims 1,25; figure 1 * ----- | 1-8 | |
| X | EP 2 326 886 B1 (SOLFAST PTY LTD [AU]) 31 May 2017 (2017-05-31) * paragraph [0005]; figure 2 * ----- | 1-8 | |

| | |
|---|---|
| | TECHNICAL FIELDS SEARCHED (IPC) |
| | F03G F22B F24S |

The present search report has been drawn up for all claims

| Place of search | Date of completion of the search | Examiner |
|---|---|---|
| Munich | 12 January 2026 | de Martino, Marcello |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P04C01)

**EP 4 741 654 A1**

## ANNEX TO THE EUROPEAN SEARCH REPORT
## ON EUROPEAN PATENT APPLICATION NO.

EP 25 21 4647

12-01-2026

| Patent document cited in search report | | | Publication date | Patent family member(s) | | | Publication date |
|---|---|---|---|---|---|---|---|
| US 2019331098 | A1 | | 31-10-2019 | US | 2019331098 | A1 | 31-10-2019 |
| | | | | WO | 2019109012 | A1 | 06-06-2019 |
| WO 2008108870 | A1 | | 12-09-2008 | AU | 2007348242 | A1 | 12-09-2008 |
| | | | | EP | 2126481 | A1 | 02-12-2009 |
| | | | | IL | 200824 | A | 30-11-2016 |
| | | | | US | 2010176602 | A1 | 15-07-2010 |
| | | | | US | 2011277471 | A1 | 17-11-2011 |
| | | | | WO | 2008108870 | A1 | 12-09-2008 |
| EP 2326886 | B1 | | 31-05-2017 | AU | 2009295356 | A1 | 01-04-2010 |
| | | | | BR | PI0919736 | A2 | 08-12-2015 |
| | | | | CL | 2011000599 | A1 | 16-09-2011 |
| | | | | CN | 102165269 | A | 24-08-2011 |
| | | | | CY | 1119374 | T1 | 14-02-2018 |
| | | | | EG | 26862 | A | 09-11-2014 |
| | | | | EP | 2326886 | A1 | 01-06-2011 |
| | | | | ES | 2638858 | T3 | 24-10-2017 |
| | | | | MA | 32648 | B1 | 01-09-2011 |
| | | | | PT | 2326886 | T | 04-09-2017 |
| | | | | US | 2011203573 | A1 | 25-08-2011 |
| | | | | WO | 2010034071 | A1 | 01-04-2010 |
| | | | | ZA | 201100707 | B | 29-08-2012 |

EPO FORM P0459